(19) Europäisches Patentamt
European Patent Office
Office européen des brevets

(11) **EP 3 560 895 B1**

(12) **FASCICULE DE BREVET EUROPEEN**

(45) Date de publication et mention
de la délivrance du brevet:
**23.12.2020 Bulletin 2020/52**

(51) Int Cl.:
***C03B 9/36*** *(2006.01)*

(21) Numéro de dépôt: **19171458.3**

(22) Date de dépôt: **26.04.2019**

(54) **EQUIPEMENT ET PROCEDE POUR FABRIQUER UN ARTICLE CREUX EN VERRE PAR SOUFFLAGE CONTROLE**

AUSRÜSTUNG UND VERFAHREN ZUM HERSTELLEN EINES ARTIKELS AUS HOHLGLAS DURCH KONTROLLIERTES GLASBLASEN

DEVICE AND METHOD FOR MANUFACTURING A HOLLOW GLASS ITEM BY CONTROLLED BLOWING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.04.2018 FR 1853732**

(43) Date de publication de la demande:
**30.10.2019 Bulletin 2019/44**

(73) Titulaire: **Pochet du Courval**
**92110 Clichy (FR)**

(72) Inventeurs:
• **LOPEZ, Antoine**
**80100 ABBEVILLE (FR)**
• **PRUVOST, Marc**
**59000 LILLE (FR)**

(74) Mandataire: **Derambure Conseil**
**66, rue de la Chaussée d'Antin**
**75009 Paris (FR)**

(56) Documents cités:
**US-A1- 2015 013 387**

EP 3 560 895 B1

**Description**

Domaine technique

L'invention se rapporte à un équipement et un procédé de fabrication d'un article creux en verre. On s'intéresse particulièrement aux articles du type flacon ou pot, notamment ceux destinés à contenir des produits cosmétiques ou des produits de parfumerie.

Contexte et Art Antérieur

Il est connu de former une ébauche de l'article à former à partir d'une paraison puis d'introduire cette ébauche de l'article dans un moule finisseur, et de procéder à une opération de soufflage à l'intérieur de l'ébauche dans le moule finisseur pour obtenir l'article à former, par injection au moins d'un gaz à une pression de formation à l'intérieur de l'ébauche de l'article.

FR2993879 enseigne d'introduire une buse de soufflage à l'intérieur de l'ébauche et de ménager un canal de décharge pour autoriser un écoulement de gaz vers l'extérieur simultanément à l'injection de gaz dans la buse. Il s'avère toutefois le procédé est assez difficile à contrôler en répétabilité, ce d'autant plus si on utilise plusieurs cavités de moulage en parallèle, notamment alimentées par un collecteur d'air comprimé commun.

On connait aussi le document US2015 013387 qui cherche à maîtriser le refroidissement de l'article en formation pendant le soufflage.

Résumé de l'invention

A cet effet, il est proposé un équipement pour former un article en verre (92), comprenant :

- un moule de formage (2) pour recevoir une ébauche en verre (91) destinée à devenir l'article en verre,
- un dispositif d'injection de gaz (10) avec une tête de soufflage (3) destinée à propulser du gaz dans la cavité à l'intérieur de l'ébauche, et destinée à être reçue dans l'embouchure (19) de l'ébauche ayant un axe principal (A), le dispositif d'injection de gaz comprenant un circuit d'air avec :

  • une arrivée de gaz sous pression PS,
  • un canal d'injection (C1) reliant l'arrivée de gaz sous pression à au moins un orifice de sortie (31) débouchant dans la cavité à l'intérieur de l'ébauche, au travers d'une première électrovanne de commande (81),
  • un canal d'échappement (C2) reliant la cavité intérieure à une sortie à l'atmosphère (35),

- au moins un premier capteur de pression (P1 ou P2) et un premier capteur de température (T1 ou T2) agencés tous deux sur le circuit d'air entre la première électrovanne de commande et la sortie à l'atmosphère (35),
- une unité de commande électropneumatique (8) configurée pour commander la première électrovanne de commande (81) en fonction des mesures de pression relevée par le premier capteur de pression (P1 ou P2) et des mesures de température relevée par le premier capteur de température (T1 ou T2),

de sorte que les conditions aérauliques de l'écoulement de gaz dans la cavité peuvent être connues et l'équipement peut ainsi commander la première électrovanne de commande (81) en fonction de critères aérauliques prédéterminés.

Grâce à ces dispositions, il est possible de bien maîtriser le profil de pression appliqué au cœur de l'ébauche. On ajuste la pression d'injection à une valeur optimale, nonobstant les variations éventuelles en amont dans le collecteur d'air comprimé commun. Les valeurs de pression et température permettent d'estimer le flux d'air instantané transitant dans la cavité de l'ébauche, en particulier le débit massique d'air ; on peut ainsi piloter en débit la séquence de soufflage. Le repoussage du verre vers les parois du moule de formage peut être ainsi mieux maîtrisé, et on s'accommode de la meilleure façon du refroidissement du verre et de la diminution de la malléabilité du verre pendant l'opération de soufflage et on évite les dispersions entre les moules voisins.

Dans divers modes de réalisation de l'invention, on peut éventuellement avoir recours en outre à l'une et/ou à l'autre des dispositions suivantes, prises isolément ou en combinaison.

Selon un aspect, il est prévu que le premier capteur de pression (P2) et le premier capteur de température (T2) sont dits capteurs aval et sont agencés sur le canal d'échappement (C2). Les conditions de pression et température prévalant dans le canal d'échappement permettent de calculer le débit massique d'air transitant dans la cavité de l'ébauche, et cette estimation est d'autant plus précise que la sortie à l'atmosphère peut se faire avec une restriction.

Selon un aspect optionnel, il est prévu il est prévu en outre un second capteur de pression (P1) et un second capteur de température (T1) dits capteurs amont agencés sur le canal d'injection (C1), et l'unité de commande électropneumatique (8) configurée pour commander la première électrovanne de commande (81) en fonction des mesures de pressions relevées par les capteurs de pression amont et aval (P1,P2) et des mesures de température relevées par les capteurs de température amont et aval (T1,T2). Ceci permet d'affiner le débit massique d'air transitant dans la cavité de l'ébauche.

Selon un aspect optionnel, il est prévu dans la tête de soufflage une cavité tampon aval (33) sur le canal d'échappement (C2), à l'endroit de laquelle sont prises les informations du premier capteur de pression (P2) et du premier capteur de température (T2). Moyennant quoi, on peut mesurer de façon fiable la pression et la température dans le canal d'échappement de l'ébauche, ces mesures n'étant que peu ou pas perturbées par les aspects dynamiques de l'écoulement.

Selon un aspect de variante, il est prévu que le premier capteur de pression (P1) et le premier capteur de température (T1) sont dits capteurs amont et sont agencés sur le canal d'injection (C1). Les conditions de pression et température prévalant dans le canal d'injection permettent de calculer le débit massique d'air transitant dans la cavité de l'ébauche.

Selon un aspect avantageux, il est prévu en outre un second capteur de pression (P2) et un second capteur de température (T2) dits capteurs aval et agencés sur le canal d'échappement (C2), et l'unité de commande électropneumatique (8) configurée pour commander la première électrovanne de commande (81) en fonction des mesures de pressions relevées par les capteurs de pression amont et aval (P1,P2) et des mesures de température relevées par les capteurs de température amont et aval (T1,T2). Ceci permet d'affiner le débit massique d'air transitant dans la cavité de l'ébauche.

Selon un aspect avantageux, il est prévu dans la tête de soufflage sur le parcours du premier canal d'injection (C1), une cavité tampon (30), à l'endroit de laquelle sont prises les informations du premier capteur de pression (P1) et du premier capteur de température (T1). Moyennant quoi, on peut mesurer de façon fiable la pression et la température au plus près de l'orifice la buse de sortie débouchant dans l'ébauche ; ces mesures n'étant que peu ou pas perturbées par les aspects dynamiques de l'écoulement.

Selon un aspect avantageux, la première électrovanne de commande (81) peut être commandée en fonction des critères aérauliques prédéterminés et en outre en fonction du temps, pour obtenir une forme intérieure (95) particulière souhaitée pour l'article en verre en formage.

Moyennant quoi le profil de pression se conjugue avec la baisse de la température induite par le soufflage et donc avec la diminution de la malléabilité du verre de l'ébauche pour repousser la matière vers les parois du moule, et ceci de manière différenciée en fonction des différentes portions de l'article. Grâce à la maîtrise de la pression au cours du temps, on peut asservir le débit massique de l'air soufflé et notamment obtenir des épaisseurs de matière différenciées dans différentes zones de l'article en verre. On peut ainsi « sculpter » l'intérieur du flacon afin de lui conférer un volume intérieur à rendu esthétique particulière et valorisante.

Selon un aspect optionnel, le canal d'échappement (C2) peut comprendre, entre la cavité intérieure et la sortie à l'atmosphère libre (35), une restriction (84) formant une perte de charge prédéfinie. Ceci forme une solution simple et fiable pour limiter la capacité d'écoulement de l'air vers l'atmosphère et donc maîtriser le soufflage dans le temps pendant l'opération de soufflage.

Selon une option alternative, le canal d'échappement (C2) comprend entre la cavité intérieure et l'atmosphère libre, une deuxième électrovanne de commande (82).

De sorte que la pression d'échappement peut être ainsi bien contrôlée, quelles que soient les conditions extérieures et quelle que soit la pression en amont de la cavité.

Selon un aspect optionnel, au moins un orifice de sortie est désaxé, à savoir avec au moins un axe de jet (W) orienté à l'écart de l'axe principal A. Moyennant quoi le soufflage peut être ainsi rendu asymétrique, et on peut obtenir une forme de la cavité intérieure dissymétrique, avec par exemple une épaisseur de verre plus importante du côté opposé à l'axe de jet W. On peut ainsi obtenir des répartitions intérieures de verre assez éloignées des répartitions standard connues dans le métier sous les vocables modèle « marloquette » ou « chapeau de gendarme », modèle « gouttes d'eau » et modèle « plat ».

Selon un aspect optionnel, la tête de soufflage comprend une pipette (4) dans laquelle est agencé au moins un orifice de sortie de gaz sous pression. La pipette permet ainsi de diriger le flux de gaz et de précisément positionner l'orifice de sortie par rapport à l'ébauche.

Selon un aspect optionnel, la pipette peut être déplaçable en translation le long de l'axe principal A. De sorte que la position de l'orifice de sortie (ou des orifices de sortie s'il y en a plusieurs) peut se trouver à l'intérieur même de l'ébauche après translation vers le bas (ou 'plongée'). Il peut aussi être prévu de faire évoluer la position de l'orifice de sortie pendant l'opération de soufflage.

De même, la hauteur de l'orifice de sortie pour le soufflage peut être choisie en fonction de l'article en verre à obtenir, notamment du volume intérieur désiré.

Selon un aspect optionnel, la pipette peut être déplaçable en rotation autour de l'axe principal A. Moyennant quoi il est possible de faire évoluer la position de l'orifice de sortie ou des orifices de sortie s'il y en a plusieurs) pendant l'opération de soufflage. De même, la position angulaire de l'orifice de sortie pour le soufflage peut être choisie en fonction de l'article en verre à obtenir, notamment du volume intérieur désiré.

Selon un aspect optionnel, il peut être prévu plusieurs orifices de sortie (31A-31D) à l'extrémité inférieure la pipette. Moyennant quoi le jet de chaque orifice permet de repousser le verre plus efficacement à des endroits où cela est nécessaire en vue d'obtenir l'article en verre désiré, notamment du volume intérieur souhaité.

Selon un aspect optionnel, l'article en verre est de type flacon ou pot. Pour des articles en verre contenant des produits de parfumerie ou des produits cosmétiques, le procédé et l'équipement permet d'obtenir des articles avec des designs très particuliers notamment avec un volume intérieur du contenant très particulier, dissymétrique, avec une vague, etc, pour un rendu esthétique extraordinaire.

Selon un aspect optionnel, lequel l'article en verre présente une section flacon extérieure rectangle, ou une section extérieure ovale, ou une section extérieure ronde. Le procédé proposé et l'équipement proposé peuvent être utilisés quelles que soient les formes extérieures des articles désirés.

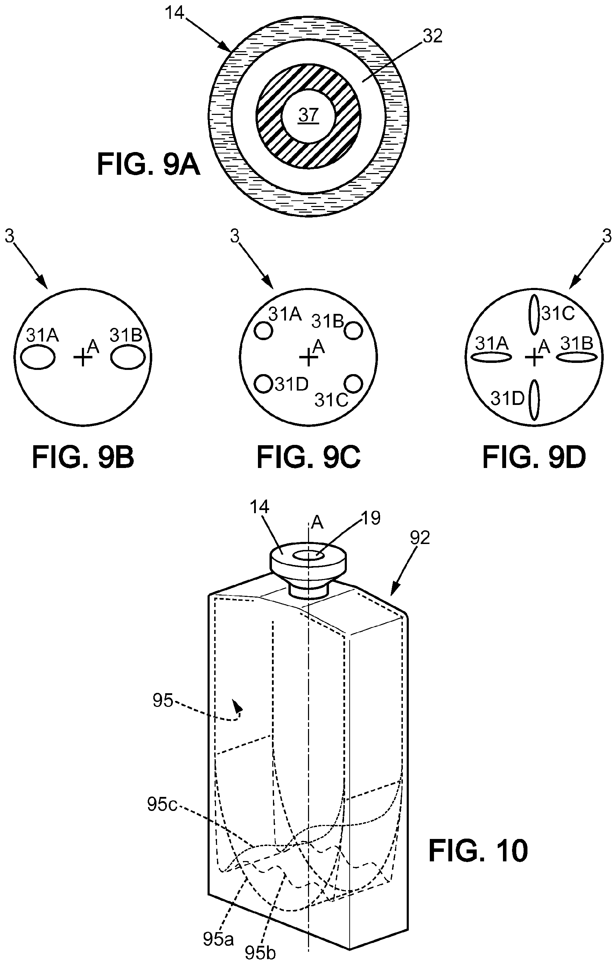

Selon un aspect optionnel, la voie d'échappement est agencée de manière annulaire autour de la voie d'injection (Fig 9B). Ceci forme une solution compacte et optimisée pour une embouchure de forme circulaire ; le canal d'injection et le canal d'échappement sont ainsi logés de façon compacte dans l'embouchure sur laquelle accoste la tête de soufflage, même pour une embouchure étroite.

Selon un aspect optionnel, le moule de formage (2) se présente comme une matrice principale formé en 2 moitiés (21,22) et un fond amovible (23). Il est ainsi facile de démouler l'article en verre une fois l'opération de soufflage terminée.

L'invention vise également un procédé pour former un article en verre par soufflage dans un moule de formage, le procédé comprenant les étapes :

- injecter, dans une cavité intérieure d'ébauche, via une première électrovanne de commande (81), un gaz sous pression via un canal d'injection (C1) reliant une arrivée de gaz sous pression à au moins un orifice de sortie (31) débouchant dans la cavité intérieure de l'ébauche, avec un circuit d'air comprenant en outre un canal d'échappement (C2) reliant la cavité intérieure à une sortie à l'atmosphère (35),
- mesurer simultanément une première pression (P1 ou P2) et une première température (T1 ou T2) sur le circuit d'air entre la première électrovanne de commande et la sortie l'atmosphère (35),
- commander la première électrovanne de commande (81) en fonction des mesures de pression et température relevées par le premier capteur de pression (P1 ou P2) et par le premier capteur de température (T1 ou T2), de sorte que les conditions aérauliques de l'écoulement de gaz dans la cavité peuvent être connues et l'équipement peut ainsi commander la première électrovanne de commande en fonction de critères aérauliques prédéterminés.

Selon un aspect optionnel, le procédé prévoit de:

- on mesure simultanément la première pression (P2) et la première température (T2) prévalant dans le canal d'échappement (C2). Les conditions de pression et température prévalant dans le canal d'échappement permettent de calculer le débit massique d'air transitant dans la cavité de l'ébauche, et cette estimation est d'autant plus précise que la sortie à l'atmosphère peut se faire avec une restriction.

Selon un aspect optionnel, le procédé prévoit de:

- mesurer simultanément une deuxième pression (P1) et une deuxième température (T1) prévalant dans prévalant dans le canal d'injection (C1),
- commander la première électrovanne de commande (81) en fonction des mesures de pressions relevées par les capteurs de pression (P1,P2) amont et aval et des mesures de température relevées par les capteurs de température (T1,T2) amont et aval. Moyennant quoi, la connaissance des conditions de pression et température, tant en amont de l'ébauche qu'en aval de l'ébauche, permet de calculer plus précisément le débit d'air et de piloter le soufflage notamment en fonction du débit massique de l'air injecté dans l'ébauche pendant la séquence de soufflage.

Selon un aspect optionnel, le procédé prévoit de:

- on mesure simultanément la première pression (P1) et une première température (T1) prévalant dans le canal d'injection (C1). Les conditions de pression et température prévalant dans le canal d'injection permettent de calculer le débit massique d'air transitant dans la cavité de l'ébauche.

Selon un aspect optionnel, le procédé prévoit de:

- on mesure simultanément une deuxième pression (P2) une la deuxième température (T2) prévalant dans le canal d'échappement (C2),
- commander la première électrovanne de commande (81) en fonction des mesures de pressions relevées par les premier et deuxième capteurs de pression (P1,P2) et des mesures de température relevées par les premier et deuxième capteurs de température (T1,T2). Moyennant quoi, la connaissance des conditions de pression et température, tant en amont de l'ébauche qu'en aval de l'ébauche, permet de calculer plus précisément le débit d'air et de piloter le soufflage notamment en fonction du débit massique de l'air injecté dans l'ébauche pendant la séquence de soufflage.

Selon un aspect optionnel, l'écoulement dans le canal d'échappement (C2) peut être contrôlé au moyen d'une deuxième électrovanne de commande (82). De sorte que la pression d'échappement peut être ainsi bien contrôlée, quelles que soient les conditions extérieures et quelle que soit la pression en amont de la cavité.

Selon un aspect optionnel, la première électrovanne de commande (81) peut être commandée en fonction des critères aérauliques prédéterminés et en outre en fonction du temps, pour obtenir une forme intérieure (95) particulière souhaitée pour l'article en verre en formage. Grâce à la maîtrise de la pression au cours du temps, on peut notamment obtenir des épaisseurs de matière différenciées dans différentes zones de l'article en verre. On peut ainsi « sculpter » l'intérieur du flacon afin de lui conférer un volume intérieur à esthétique valorisante.

Description des figures

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :

- la figure 1 représente schématiquement une installation pour former un article en verre mis en œuvre dans le cadre générale la présente invention,
- la figure 2 représente schématiquement l'introduction de l'ébauche dans le moule de formage,
- la figure 3 illustre un schéma pneumatique selon un premier mode de réalisation,
- la figure 4 illustre schématiquement en coupe l'équipement de soufflage placé sur l'ébauche dans le moule,
- la figure 5 représente schématiquement en coupe l'ébauche dans le moule avant le soufflage effectif, selon une première variante de flacon en verre à réaliser,
- la figure 6 est analogue à la figure 5, mais après la séquence de soufflage et avant ouverture du moule,
- la figure 7 représente schématiquement en coupe l'ébauche dans le moule avant le soufflage effectif, selon une deuxième variante de flacon en verre à réaliser,
- la figure 8 est analogue à la figure 7, mais après la séquence de soufflage et avant ouverture du moule,
- les figures 9A, 9B, 9C et 9D illustrent diverses sections de la pipette de la tête de soufflage,
- la figure 10 illustre différentes variantes de flacon pouvant être obtenus,
- la figure 11 représente un diagramme d'une unité de commande électropneumatique,
- la figure 12 illustre un diagramme de temps avec les pressions et températures relevées pendant une séquence de soufflage,
- la figure 13 illustre schématiquement une variante de la tête de soufflage dans une version simplifiée.

Description détaillée

Sur les différentes figures, les mêmes références désignent des éléments identiques ou similaires. Pour des raisons de clarté de l'exposé, certaines éléments ne sont pas nécessairement représentés à l'échelle.

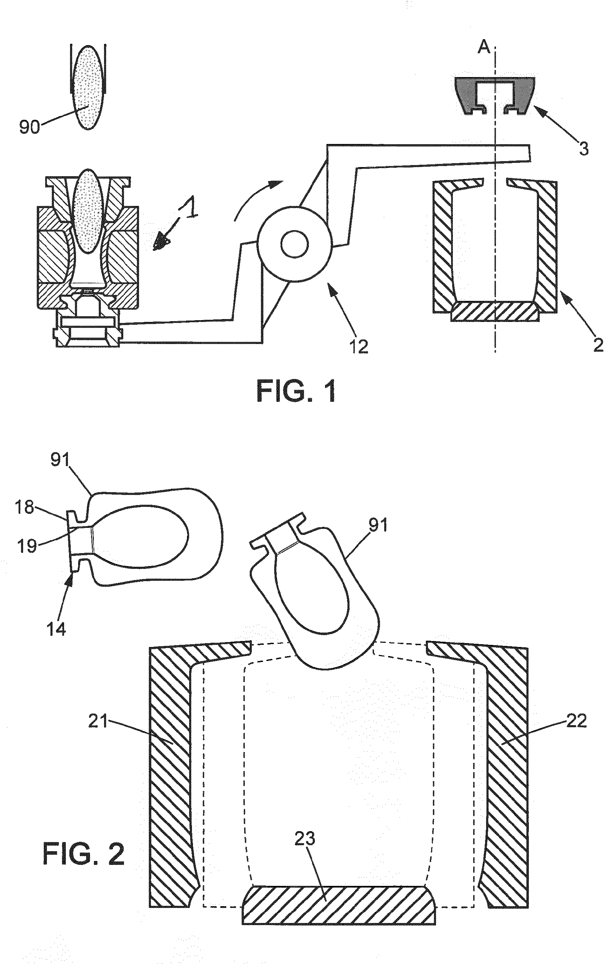

Les figure 1 et 2 représentent une vue d'ensemble d'une installation pour former un article en verre en creux dans le cadre générale la présente invention.

L'installation comprend un moule ébaucheur **1** et un moule finisseur **2**. Un manipulateur **12** permet de transférer une ébauche qui sort du moule ébaucheur **1** vers le moule finisseur **2**.

Comme connu en soi, donc non décrit en détail ici, on dépose une goutte calibrée **90** de verre en fusion (appelée 'paraison' dans le métier) dans un moule ébaucheur **1**.

Dans l'exemple illustré, on souffle de l'air comprimé sur la goutte de verre en fusion pour la conformer dans la cavité du moule ébaucheur et ainsi former une ébauche **91**. En variante, on pourrait utiliser un poussoir de formage pour former une ébauche **91**. L'ébauche 91 est aussi appelée 'préforme'.

On note que la bague **14** est formée dans le moule ébaucheur **1**.

La zone de la bague comprend une embouchure **19** et un col **18**.

Après cette première étape de préformation, on transfère l'ébauche **91** via le bras manipulateur **12** vers le moule finisseur aussi appelé ici moule de formage **2**.

On s'intéresse maintenant à l'équipement proposé qui contient, outre le moule de formage **2** ci-dessus mentionné, un dispositif d'injection de gaz **10** et une unité de commande **8** qui vont être détaillées dans la suite.

Le dispositif d'injection de gaz comprend une tête de soufflage **3** destinée à propulser du gaz dans la cavité à l'intérieur de l'ébauche **91**.

La tête de soufflage **3** est configurée pour être reçue dans l'embouchure **19** de l'ébauche ayant un axe **A.** Après dépose de la préforme, la tête de soufflage **3** est descendue pour être accostée sur l'embouchure **19** de l'ébauche **91**.

On remarque que la portion inférieure de la tête de soufflage présente une forme complémentaire de la forme de la bague ; on obtient ainsi un contact continu qui permet d'avoir substantiellement une étanchéité à l'air à cet endroit.

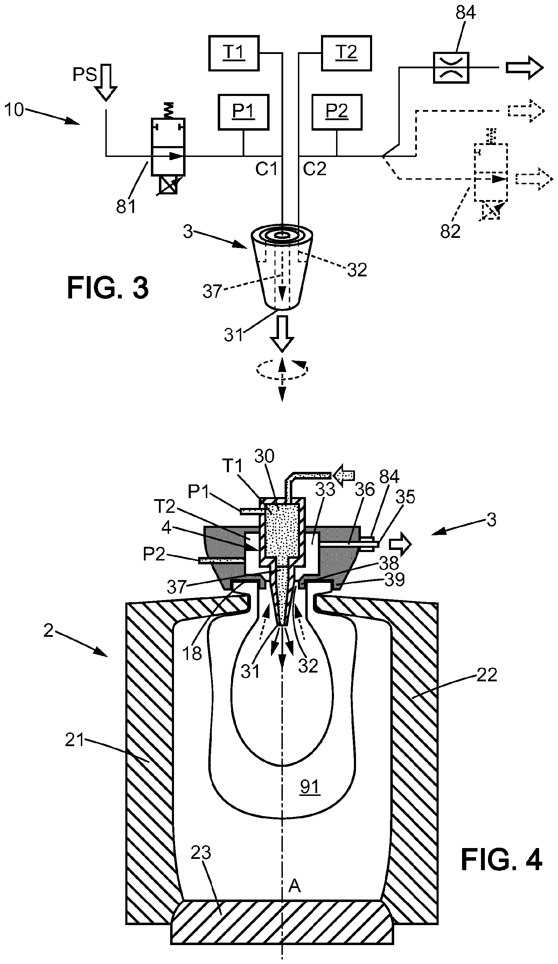

Il peut être prévu dans la tête de soufflage une collerette de centrage intérieur de l'embouchure, illustré par le repère **38** à la figure 4. En alternative ou en complément, le centrage peut aussi être réalisé sur l'extérieur de la bague par une projection annulaire **39** (figure 4). Dans une autre configuration illustrée plus loin, le centrage n'est pas nécessaire, on appuie juste à plat.

Dans l'exemple illustré, le gaz utilisé est de l'air sous pression. Il n'est toutefois pas exclu d'utiliser un autre gaz dans certains cas d'application de la présente invention, par exemple un gaz chimiquement inerte.

Comme illustré génériquement à la figure 3, le dispositif d'injection de gaz comprend une arrivée de gaz sous pression **PS,** et un premier canal d'injection **C1** reliant l'arrivée de gaz sous pression à au moins un orifice de sortie **31** débouchant dans la cavité à l'intérieur de l'ébauche.

Selon une configuration optionnelle, sur le premier canal d'injection, il peut être prévu un capteur de pression **P1** dit 'amont' et un capteur de température **T1** dit 'amont'.

L'orifice de sortie **31** débouche dans la cavité à l'intérieur de l'ébauche, mais l'air soufflé passe en amont au travers d'une première électrovanne de commande **81**. Il peut être prévu plusieurs orifices de sortie, comme il sera vu plus loin.

Le capteur de pression amont **P1** et le capteur de température amont **T1** sont agencés sur une portion du premier canal entre la première électrovanne de commande **81** et l'orifice de sortie **31**. De préférence, le capteur de température amont **T1** comprend une partie sensible située en aval de la prise d'air prévu pour le capteur de pression amont **P1,** de préférence non loin de l'arrivée de gaz au niveau de l'orifice de sortie **31.**

La tête de soufflage **3** comprend par ailleurs un canal d'échappement **C2** reliant la cavité intérieure à une sortie à l'atmosphère **35** par un passage d'échappement repéré **32**.

Selon une configuration optionnelle, le canal de décharge **C2** peut être équipé d'un capteur de pression **P2** dit 'aval' et d'un capteur de température **T2** dit 'aval'.

De préférence, le capteur de température **T2** aval comprend une partie sensible située en amont de la prise d'air prévu pour le capteur de pression **P2** aval, de préférence non loin de l'échappement de gaz en sortie de la cavité.

Dans ce cas, avec seulement le capteur de température **T2** aval et le capteur de pression **P2** aval, l'unité de commande électropneumatique **8** est configurée pour commander la première électrovanne de commande **81** en fonction des mesures de pressions relevées par les premier et deuxième capteurs de pression (P1,P2).

Ainsi, on peut avoir la captation P et T (pression et température) seulement en amont, ou seulement en aval, ou bien encore à la fois en amont en aval.

On appelle « *premier* » capteur de pression le capteur de pression principal, c'est-à-dire soit le capteur de pression amont **P1** soit le capteur de pression aval **P2** suivant la présence de l'un ou l'autre.

On appelle « *premier* » capteur de température le capteur de température principal, c'est-à-dire soit le capteur de température amont **T1** soit le capteur de température aval **T2** suivant la présence de l'un ou l'autre.

Autrement dit, on a soit le couple **P1,T1,** soit le couple **P2,T2** comme couple de capteurs principaux.

On appelle « *second* » capteurs de pression et de température, le couple de capteurs auxiliaires, en supplément du couple de capteurs principaux appelés « premiers » les seconds capteurs peuvent être soit le couple **P1,T1,** soit le couple **P2,T2** suivant la présence de l'un ou l'autre comme capteurs principaux.

On remarque donc que la tête de soufflage peut être dite instrumentée, car elle comprend au moins un couple [capteur de température + capteur de pression] qui prélève ces informations dans une chambre tampon de la tête de soufflage (soit en amont soit en aval de la cavité intérieure de l'ébauche).

Selon une option particulière, le canal d'échappement **C2** peut comprendre, entre la cavité intérieure et l'atmosphère libre **35,** une deuxième électrovanne de commande **82**.

Selon une alternative, le canal d'échappement peut déboucher directement dans l'atmosphère libre 35.

Selon une autre alternative, le canal d'échappement C2 comprend, entre la cavité intérieure et la sortie à l'atmosphère libre35, une restriction **84** formant une perte de charge pneumatique prédéfinie. On peut ainsi limiter le débit d'écoulement en sortie et procéder au soufflage dans la cavité avec une pression interne supérieure à celle qui prévaut en cas d'échappement libre vers l'atmosphère 35, mais inférieure au quart du soufflage sans échappement.

Comme illustré à la figure 4, le dispositif d'injection de gaz 10 comprend au coeur de la tête de soufflage, une pipette repérée **4**. Cette pipette peut aussi être appelée « buse ». Cette pipette reçoit par une connexion pneumatique l'arrivée de gaz sous pression en provenance de l'électrovanne de commande. Cette connexion pneumatique se situe de préférence dans la partie supérieure de la pipette c'est-à-dire non loin de l'axe principal du moule.

Le premier canal **C1** comprend une cavité tampon ou chambre tampon **30** (cavité tampon en amont de l'ébauche), à l'endroit de laquelle se situe la prise de température (capteur **T1**) ainsi que la prise de pression du premier capteur de pression **P1**.

De façon annulaire autour de la pipette, on trouve en partie basse un passage d'échappement **32** et en partie haute une chambre d'échappement **33**.

Le deuxième canal d'échappement **C2** comprend donc une chambre tampon **33** à l'endroit de laquelle se situe la deuxième prise de température (capteur **T2**) ainsi que la prise de pression du deuxième capteur de pression **P2**.

Un canal radial **36** relie la chambre d'échappement **33** soit à la deuxième électrovanne de commande **82,** soit à la restriction **84,** soit directement à l'air libre en fonction des différentes configurations possibles.

Sur la pipette, dans un premier exemple, il est prévu un orifice de sortie **31** qui se trouve à l'extrémité inférieure ; un canal d'amenée **37** relie la chambre tampon **33** à cet orifice de sortie **31**. Le canal d'amenée **37** peut présenter une section tronc conique décroissante vers l'orifice de sortie.

Dans une version de base, l'unité de commande électropneumatique **8** est configurée pour commander la première électrovanne de commande **81** en fonction des mesures de pressions relevées par le premier capteur de pression P1 et des mesures de température relevées par le premier capteur de température T1.

Si le canal d'échappement C2 est équipé de capteur de pression et température, alors l'unité de commande électropneumatique **8** est configurée pour commander la première électrovanne de commande **81** en fonction des mesures de pressions relevées par les premier et deuxième capteurs de pression (P1,P2) et des mesures de température relevées par les premier et deuxième capteurs de température (T1,T2).

Lorsque l'équipement inclus en outre une électrovanne sur la sortie, alors l'unité de commande électromagnétique est configurée pour commander également la deuxième électrovanne de commande **82.**

La première électrovanne de commande **81** est commandée en fonction d'une consigne de pression.

La consigne de pression est choisie entre une pression minimale sensiblement égale à 1 bar et une pression maximale sensiblement égale à 7 bars.

Avantageusement, le pilotage de l'électrovanne de commande pour souffler avec une pression de consignes permet ce de s'affranchir des variations éventuelles de pression en amont notamment dans le collecteur d'un comprimé commun à une pluralité de moules identiques.

La première électrovanne de commande **81** est commandée en fonction des critères aérauliques prédéterminés pour obtenir une forme intérieure **95** particulière souhaitée pour l'article en verre en formage.

Optionnellement, la première électrovanne de commande **81** est commandée en fonction des critères aérauliques prédéterminés et en outre en fonction du temps.

Le fluide utilisé ici (de l'air) est compressible. L'écoulement de l'air dans le système de soufflage est gouverné par des équations physiques dont la relation de Saint Venant :

$$1 + \frac{\gamma+1}{2} M^2 = \frac{T_i}{T} = \left(\frac{\rho_i}{\rho}\right)^{\gamma-1} = \left(\frac{P_i}{P}\right)^{\frac{\gamma-1}{\gamma}} \qquad \text{(Equation A)}$$

$\gamma$ est le rapport des capacités thermiques massiques à pression et à volume constants ; $\gamma$ = Cp/Cv ; $\gamma$ est l'indice adiabatique d'un gaz, aussi appelé coefficient de Laplace.

$\gamma$ est de l'ordre de 1,35 à 1,45 pour l'air, souvent voisin de 1,405 à altitude faible dans la composition standard de l'air.

**M** représente la vitesse d'écoulement exprimé en nombre de Mach.

$\rho$ et $\rho_i$ représentent la masse volumique.

On peut donc calculer le débit massique qui a pour formule :

$$Q_m = \rho S \sqrt{\frac{2\gamma}{\gamma-1} \frac{P_i}{\rho_i} \left[1 - \left(\frac{P}{P_i}\right)^{\frac{\gamma-1}{\gamma}}\right]}$$

Si on résume les deux inconnus c'est $\rho$ et $\rho_i$.

Or la masse volumique est exprimée en fonction de la pression et de la température à un point donné, par :

$$\rho_i = \frac{P_i V}{R T_i}$$

Et d'après les équations de saint venant

$$\rho = \rho_i \left(\frac{P}{P_i}\right)^{\frac{1}{\gamma}}$$

Donc le débit massique s'écrit comme suit :

$$Q_m = \rho_i \left(\frac{P}{P_i}\right)^{\frac{1}{\gamma}} S \sqrt{\frac{2\gamma}{\gamma-1}\frac{P_i}{\rho_i}\left[1 - \left(\frac{P}{P_i}\right)^{\frac{\gamma-1}{\gamma}}\right]} \qquad \text{(Equation 1)}$$

Les grandeurs définies par l'indice i sont appelées « grandeurs génératrices » qui correspondent à l'état repos du fluide quand la vitesse est nulle.

Dans le cas présent, on peut considérer que les grandeurs génératrices sont présentes dans la chambre de repos **33** de la tête côté échappement juste avant l'orifice de sortie, à savoir **P2** et **T2**

Nous avons la pression et la température **P1** et **T1** qui règnent dans le canal d'injection C1 de la tête notamment au niveau de la chambre tampon **30** d'injection.

En sortie d'orifice côté échappement, on sort à l'air libre de P=Patm.

On applique la formule du débit massique ci-dessus avec P= Patmo et avec soit Pi=P1, soit Pi=P2, selon que l'on a comme couple de capteurs principaux soit le couple **P1,T1,** soit le couple **P2,T2.**

Si on a seulement P2,T2, alors :

$$Q_m = \rho_i \left(\frac{Patmo}{P2}\right)^{\frac{1}{\gamma}} S \sqrt{\frac{2\gamma}{\gamma-1}\frac{P2}{\rho_i}\left[1 - \left(\frac{Patmo}{P2}\right)^{\frac{\gamma-1}{\gamma}}\right]} \qquad \text{(Equation 2)}$$

Si on a seulement P1,T1, alors moyennant la prise en compte d'une perte de charge WP au niveau de la buse d'injection:

$$Q_m = \rho_i \left(\frac{Patmo}{P1-WP}\right)^{\frac{1}{\gamma}} S \sqrt{\frac{2\gamma}{\gamma-1}\frac{P1}{\rho_i}\left[1 - \left(\frac{Patmo}{P1-WP}\right)^{\frac{\gamma-1}{\gamma}}\right]} \qquad \text{(Equation 3)}$$

Si on a la combinaison de P1,T1 et P2,T2, on peut évaluer une quantité auxiliaire :

$$Q_m = \rho_i \left(\frac{P2}{P1}\right)^{\frac{1}{\gamma}} S \sqrt{\frac{2\gamma}{\gamma-1}\frac{P1}{\rho_i}\left[1 - \left(\frac{P2}{P1}\right)^{\frac{\gamma-1}{\gamma}}\right]} \qquad \text{(Equation 4)}$$

L'article creux **92** à obtenir est par exemple un flacon de forme générale parallélépipédique, comprenant la bague **14** avec un orifice de diamètre intérieur de préférence compris entre 3 mm et 13 mm, comme montré à la figure 10.

L'article creux est caractérisé par une « répartition intérieure de verre ». Par « répartition intérieure de verre », on entend une forme particulière de la paroi interne du flacon due à une variation de l'épaisseur de verre **94** entre la paroi externe et la paroi interne du flacon.

Avantageusement, l'article creux présente une répartition intérieure de verre spécifique, non triviale, impossible à obtenir par un soufflage simple classique.

Avantageusement, on peut fabriquer un flacon de parfumerie avec un volume interne utile du flacon compris entre 2 ml et 500 ml, le plus souvent entre 10 ml et 200 ml.

Dans l'article fini, le volume occupé par le verre lui-même peut être compris entre 10% et 30% du volume total du flacon. Cette forte proportion de verre permet d'avoir un flacon lourd et pesant qui connote et souligne la qualité du produit contenu. Dans les flacons les plus courants de parfumerie visés par le procédé, le volume interne utile du flacon est compris entre 20 ml et 100 ml.

En variante non représentée, l'article creux peut être un pot rond, par exemple pour un crème cosmétique. Le pot présente par exemple un diamètre intérieur inférieur à 105 mm.

En variante non représentée, il est aussi possible d'appliquer le procédé selon l'invention pour le soufflage d'une bouteille.

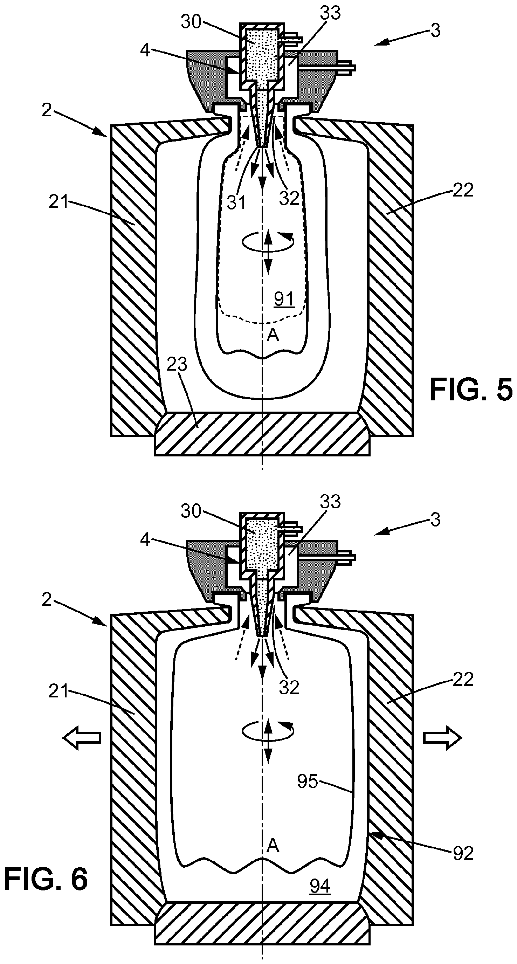

Les figures 5 et 6 illustrent l'utilisation du procédé pour former un flacon avec un volume intérieur **95** comportant une vague à sa base. Selon cet exemple, c'est la maîtrise de la vitesse d'éjection du gaz qui permet de créer un effet de vague dans le fond **92** du flacon.

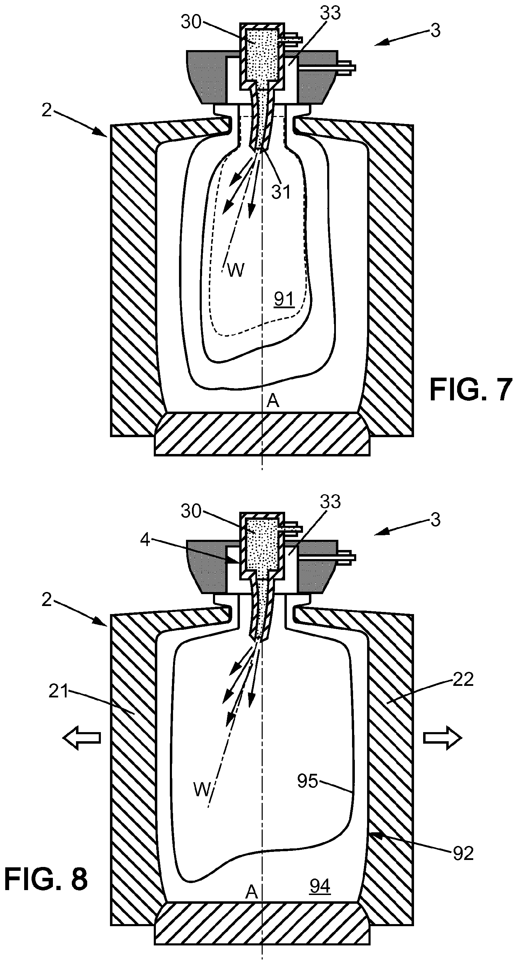

Les figures 7 et 8 illustrent l'utilisation du procédé pour former un flacon avec un volume intérieur **95** présentant une forte dissymétrie, par exemple en forme de virgule dans l'exemple illustré. Selon cet exemple, l'axe de l'orifice de sortie est désaxé ; en effet l'éjection de gaz se produit selon la direction **W** dont la direction se trouve écartée de la direction principale de l'axe **A.** Le repoussage du verre est donc favorisé sur la partie gauche du schéma alors qu'à l'inverse sur la partie droite il est minimisé favorisant ainsi une épaisseur de verre **92** plus importante dans le fond de flacon à droite.

On a illustré également aux figures 7 et 8, une variante de configuration mécanique de la tête de soufflage, selon laquelle la tête de soufflage vient accoster à plat sur la face frontale de la bague de l'ébauche (sans collerette de centrage intérieure ou extérieure).

La figure 9A illustre que le passage d'échappement **32** est agencée de manière annulaire autour de la voie d'injection et de son canal d'amenée **37.**

Sur la figure 9B, on a représenté une variante de l'extrémité basse de la pipette dans lequel il est prévu deux orifices de sortie **31A,31B** de part et d'autre de l'axe principal ; cette configuration est particulièrement avantageuse pour les flacons de forme générale rectangle comme celui illustré la figure 10, chaque orifice ayant une forme ovale.

Sur la figure 9C, on a représenté une variante de l'extrémité basse de la pipette dans lequel il est prévu quatre orifices de sortie **31A-31D** de part et d'autre de l'axe principal, chaque orifice ayant une forme ronde.

Sur la figure 9D, on a représenté une autre variante de l'extrémité basse de la pipette avec quatre orifices de sortie ayant une forme de fente.

La figure 10 illustre virtuellement sur un seul schéma trois types de répartition intérieure, avec une forme en goutte **95a,** une forme en vague **95b** et une forme en virgule **95c.**

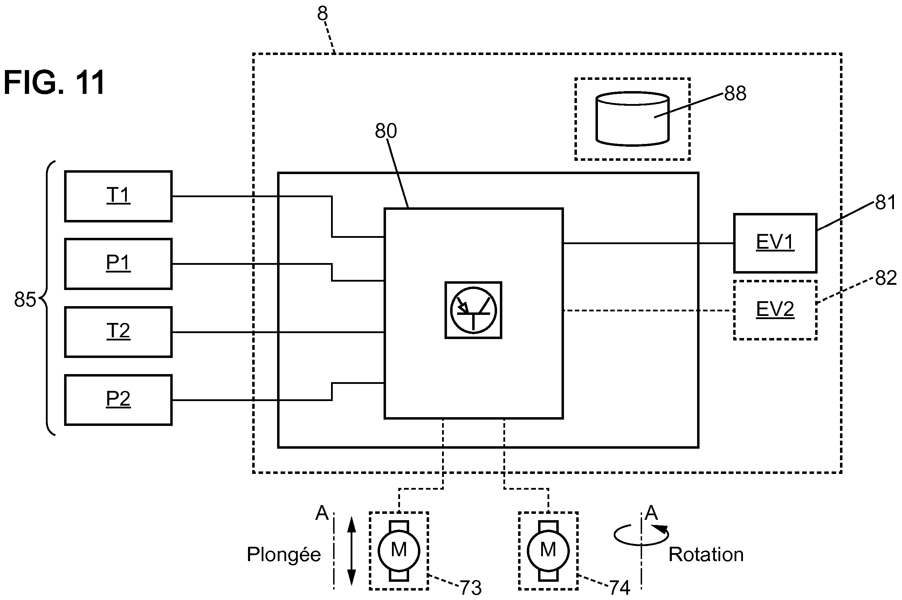

La figure 11 représente un diagramme fonctionnel avec l'unité de commande électropneumatique **8,** avec en entrée les différents capteurs **85,** à savoir le premier capteur de température **T1,** le premier capteur de pression **P1,** le deuxième capteur de température **T2,** et le deuxième capteur de pression **P2.**

L'unité de commande électropneumatique **8** comprend un microprocesseur **80** ou un automate programmable industriel, ou encore plus généralement une unité de calcul de type quelconque. L'unité de commande électropneumatique **8** pilote la bobine **EV1** de la première électrovanne **81,** et, si celle-ci est présente, la bobine **EV2** de la deuxième électrovanne **82.**

Accessoirement, l'unité de commande électropneumatique **8** commande également un actionneur **73** configuré pour faire déplacer la pipette de haut en bas, ce qui correspond au mouvement de plongée, ainsi que le mouvement inverse. Accessoirement, l'unité de commande électropneumatique **8** commande également un second actionneur **74** configuré pour faire déplacer la pipette selon une rotation autour de l'axe principal **A.**

Selon une option éventuelle, la pipette peut être, par rapport à la tête de soufflage, montée à translation le long de l'axe **A.** Ceci peut être fait au moyen de colonnettes de guidage et d'un vérin de commande ou encore d'un mécanisme de vis-crémaillère.

Selon une option éventuelle, il peut être prévu des moyens de déplacement d'au moins un orifice de sortie. En particulier, il peut être prévu des moyens de déplacement de la pipette par rapport au reste de la tête de soufflage, en translation et/ou en rotation.

Selon une option, la pipette peut être, par rapport à la tête de soufflage, montée à translation le long de l'axe A. Ceci peut être fait au moyen de colonnettes de guidage et d'un vérin de commande ou encore d'un mécanisme de vis-crémaillère.

Selon une option, la pipette peut être, par rapport à la tête de soufflage, montée à rotation autour de l'axe **A.** Ceci peut être fait au moyen d'une liaison à pallier tournant conjugué à une motorisation basée sur un engrenage et une douille à denture, ou un vérin agissant sur la pipette au travers d'un embiellage.

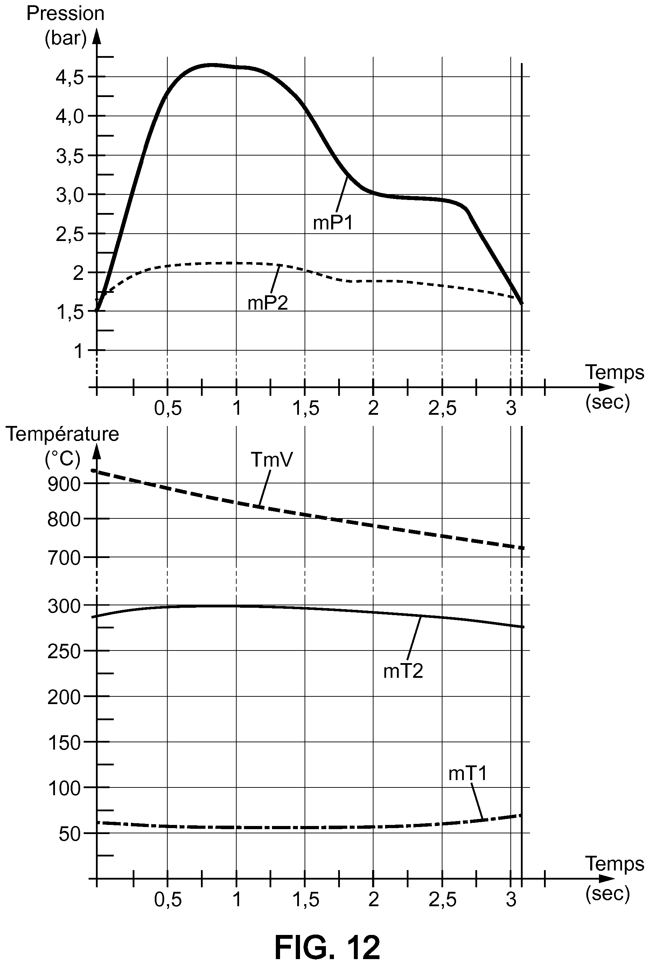

La figure 12 illustre un diagramme de temps avec les pressions et températures relevées pendant une séquence de soufflage.

Pour un flacon de volume classique de type 50 ml, le temps de soufflage peut être compris entre de 2 sec à 10 sec, de préférence 3 sec à 4 sec.

Sur l'exemple illustré, la séquence de soufflage dure un peu plus de trois secondes. Selon l'exemple illustré, le canal d'échappement **C2** est muni d'une restriction de diamètre 4 mm.

La première pression **mP1** représente une première pression mesuré dans la chambre tampon du canal d'injection. L'électrovanne **81** passe d'un état fermé à un état ouvert correspondant à la mise en pression (pendant environ 500 millisecondes) jusqu'à la pression de consigne désirée, aux alentours de 4,5 bar et ceci perdure environ 1,5 secondes, en référence à la courbe en trait plein repérée **mP1,** après quoi l'électrovanne 81 est commandée en mode proportionnel pour abaisser la pression mP1 jusqu'à un palier aux environs de 3 bars, à nouveau pendant environ 1,5 secondes, après quoi l'électrovanne est refermée, jusqu'à ce que la mesure de pression **mP1** rejoigne sensiblement la pression 1,5 bars.

La courbe de la mesure de la deuxième pression **mP2** correspond à la pression mesurée sur le canal d'échappement **C2**. Dans l'exemple illustré, il n'y a pas de deuxième électrovanne de commande **82** simplement une restriction de section d'échappement. La deuxième pression **mP2** à l'échappement bien s'avère être relativement proportionnelle à la première pression **mP1** pendant la durée du soufflage.

Pendant ce temps, les températures évoluent comme suit : la température mesurée en entrée **mT1** baisse d'abord légèrement au niveau de 50 °C, puis augmente dans la phase de re-fermeture de l'électrovanne **81** (fin de séquence de soufflage) car le débit et la vitesse se réduisent et l'air dans la chambre tampon 30 est alors réchauffé par la pipette et la tête de soufflage. L'air en sortie, comme repéré par **mT2,** est beaucoup plus chaud car il a été réchauffé par le passage à l'intérieur de la cavité où le verre est à une température comprise entre 250°C et 300°C selon le l'avancement du soufflage et la nuance de verre retravaillé.

Comme illustré à la figure 12, une température moyenne de référence prise dans le verre **TmV** illustre la diminution de température au cours du soufflage en partant de plus de 900°C pour terminer à un peu plus de 700°C.

Les inventeurs ont pu déterminer des invariants formés par des couples [buse, échappement], ces données pouvant être stockées dans une base de données **88,** soit intégré à l'unité de commande soit déportée.

On note que les électrovannes **81,82** sont de préférence proportionnelles, il n'est toutefois pas exclu d'avoir des électrovannes tout ou rien.

L'unité de commande électropneumatique **8** peut inclure une base de données **88** comportant des caractéristiques des articles de verre déjà formé par le procédé proposé.

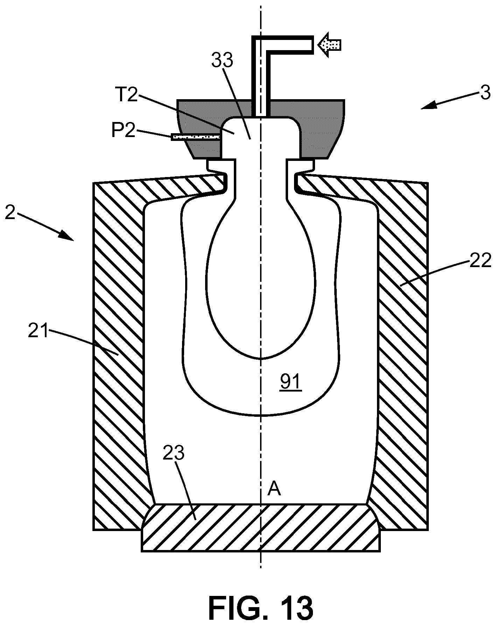

Comme illustré sur la figure 13, on peut utiliser et une tête de soufflage simplifiée sans buse, dans une configuration obturée et sans échappement, mais avec toutefois le capteur de pression **P2** (sans **P1** ici) et le capteur de température **T2** (sans **T1** ici).

La mesure de pression **P2** et le pilotage de la première électrovanne de commande **81** permet de connaître la pression de soufflage à tout moment dans l'ébauche et permet de mieux maîtriser le repoussage du verre vers les parois du moule de formage ; moyennant quoi on peut éviter les dispersions entre les moules voisins.

## Revendications

1. Equipement pour former un article en verre (92), comprenant :

   - un moule de formage (2) pour recevoir une ébauche en verre (91) destinée à devenir l'article en verre,
   - un dispositif d'injection de gaz (10) avec une tête de soufflage (3) destinée à propulser du gaz dans la cavité à l'intérieur de l'ébauche, et destinée à être reçue dans l'embouchure (19) de l'ébauche ayant un axe principal (A), le dispositif d'injection de gaz comprenant un circuit d'air avec :

      • une arrivée de gaz sous pression PS,
      • un premier canal d'injection (C1) reliant l'arrivée de gaz sous pression à au moins un orifice de sortie (31) débouchant dans la cavité à l'intérieur de l'ébauche, au travers d'une première électrovanne de commande (81),
      • un canal d'échappement (C2) reliant la cavité intérieure à une sortie à l'atmosphère (35),

   - au moins un premier capteur de pression (P1;P2) et un premier capteur de température (T1;T2) agencés tous deux sur le circuit d'air entre la première électrovanne de commande et la sortie l'atmosphère (35),
   - une unité de commande électropneumatique (8) configurée pour commander la première électrovanne de commande (81) en fonction des mesures de pression relevée par le premier capteur de pression (P1) et des mesures de température relevée par le premier capteur de température (T1),

   de sorte que les conditions aérauliques de l'écoulement de gaz dans la cavité peuvent être connues et l'équipement peut ainsi commander la première électrovanne de commande (81) en fonction de critères aérauliques prédéterminés.

2. Equipement selon la revendication 1, dans lequel il est prévu que le premier capteur de pression (P2) et le premier capteur de température (T2) sont dits capteurs aval et sont agencés sur le canal d'échappement (C2).

3. Equipement selon la revendication 2, dans lequel il est prévu un second capteur de pression (P1) et un second capteur de température (T1) agencés sur le canal d'injection (C1), et l'unité de commande électropneumatique (8) configurée pour commander la première électrovanne de commande (81) en fonction des mesures de pressions relevées par les premier et deuxième capteurs de pression (P1,P2) et des mesures de température relevées par les premier et deuxième capteurs de température (T1,T2).

4. Equipement selon l'une des revendications 1 à 3, dans lequel il est prévu dans la tête de soufflage une cavité tampon aval (33) sur le canal d'échappement (C2), à l'endroit de laquelle sont prises les informations du premier capteur de pression (P2) et du premier capteur de température (T2).

5. Equipement selon l'une des revendications 1 à 4, dans lequel il est prévu que le premier capteur de pression (P1) et le premier capteur de température (T1) sont dits capteurs amont et sont agencés sur le canal d'injection (C1).

6. Equipement selon l'une des revendications 1 à 5, dans lequel il est prévu un second capteur de pression (P2) et un second capteur de température (T2) agencés sur le canal d'échappement (C2), et l'unité de commande électropneumatique (8) configurée pour commander la première électrovanne de commande (81) en fonction des mesures de pressions relevées par les premier et deuxième capteurs de pression (P1,P2) et des mesures de température relevées par les premier et deuxième capteurs de température (T1,T2).

7. Equipement selon l'une des revendications 5 à 6, dans lequel il est prévu dans la tête de soufflage sur le parcours du premier canal d'injection (C1), une cavité tampon (30), à l'endroit de laquelle sont prises les informations du premier capteur de pression (P1) et du premier capteur de température (T1).

8. Equipement selon l'une des revendications 1 à 7, dans lequel la première électrovanne de commande (81) est commandée en fonction des critères aérauliques prédéterminés et en outre en fonction du temps, pour obtenir une forme intérieure (95) particulière souhaitée pour l'article en verre en formage.

9. Equipement selon l'une des revendications 1 à 8, dans lequel le canal d'échappement (C2) comprend entre la cavité intérieure et l'atmosphère libre, une restriction (84) formant une perte de charge prédéfinie.

10. Equipement selon l'une des revendications 1 à 8, dans lequel le canal d'échappement (C2) comprend entre la cavité intérieure et l'atmosphère libre, une deuxième électrovanne de commande (82).

11. Equipement selon l'une des revendications 1 à 10, dans lequel au moins un orifice de sortie est désaxé, à savoir avec au moins un axe de jet (W) orienté à l'écart de l'axe principal A, et/ou il est prévu plusieurs orifices de sortie (31A-31D) à l'extrémité inférieure la pipette.

12. Equipement selon l'une des revendications 1 à 11, dans lequel la tête de soufflage comprend une pipette (4) dans laquelle est agencé au moins un orifice de sortie de gaz sous pression et/ou la pipette est déplaçable en translation le long de l'axe A.

13. Procédé pour former un article en verre par soufflage dans un moule de formage en partant d'une ébauche, le procédé comprenant les étapes :

   - injecter, dans une cavité intérieure d'ébauche, via une première électrovanne de commande (81), un gaz sous pression via un canal d'injection (C1) reliant une arrivée de gaz sous pression à au moins un orifice de sortie (31) débouchant dans la cavité intérieure de l'ébauche,
   avec un circuit d'air comprenant en outre un canal d'échappement (C2) reliant la cavité intérieure à une sortie à l'atmosphère (35),
   - mesurer simultanément une première pression (P1;P2) et une première température (T1;T2) sur le circuit d'air entre la première électrovanne de commande et la sortie l'atmosphère (35),
   - commander la première électrovanne de commande (81) en fonction des mesures de pression et température relevées par le premier capteur de pression (P1;P2) et par le premier capteur de température (T1;T2),
   de sorte que les conditions aérauliques de l'écoulement de gaz dans la cavité peuvent être connues et une unité de commande électropneumatique (8) peut ainsi commander la première électrovanne de commande (81) en fonction de critères aérauliques prédéterminés.

**14.** Procédé selon la revendication 13, dans lequel il est prévu :

- on mesure simultanément la première pression (P2) et la première température (T2) prévalant dans le canal d'échappement (C2),

et/ou dans lequel il est prévu :

- on mesure simultanément une deuxième pression (P1) et une deuxième température (T1), prévalant dans le canal d'injection (C1),
- commander la première électrovanne de commande (81) en fonction des mesures de pressions relevées par les premier et deuxième capteurs de pression (P1,P2) et des mesures de température relevées par les premier et deuxième capteurs de température (T1,T2).

**15.** Procédé selon la revendication 13, dans lequel il est prévu :

- on mesure simultanément la première pression (P1) et la première température (T1) prévalant dans le canal d'injection (C1),

et/ou dans lequel il est prévu :

- on mesure simultanément une deuxième pression (P2) et une deuxième température (T2) prévalant dans le canal d'échappement (C2),
- commander la première électrovanne de commande (81) en fonction des mesures de pressions relevées par les premier et deuxième capteurs de pression (P1,P2) et des mesures de température relevées par les premier et deuxième capteurs de température (T1,T2).

**Patentansprüche**

**1.** Ausrüstung zum Formen eines Glasartikels (92), umfassend:

- eine Formgebungsform (2) zur Aufnahme eines Glasrohlings (91), welcher dazu ausgebildet ist, zu dem Glasartikel zu werden,
- eine Gasinjektionsvorrichtung (10) mit einem Blaskopf (3), welcher dazu ausgebildet ist, Gas in den Hohlraum im Inneren des Rohlings zu treiben, und dazu ausgebildet ist, in der Mündung (19) des Rohlings mit einer Hauptachse (A) aufgenommen zu werden, wobei die Gasinjektionsvorrichtung einen Luftkreislauf umfasst, mit:

  ◦ einem Druckgaseinlass PS,
  ◦ einem ersten Einspritzkanal (C1), der den Druckgaseinlass mit wenigstens einer Auslassöffnung (31) verbindet, welche durch ein erstes Magnetsteuerventil (81) in den Hohlraum im Inneren des Rohlings mündet,
  ◦ einem Auslasskanal (C2), der den inneren Hohlraum mit einem Auslass zur Atmosphäre (35) verbindet,

- wenigstens einen ersten Drucksensor (P1; P2) und einen ersten Temperatursensor (T1; T2), welche beide in dem Luftkreislauf zwischen dem ersten Steuermagnetventil und dem Auslass zur Atmosphäre (35) angeordnet sind,
- eine elektropneumatische Steuereinheit (8), welche dazu konfiguriert ist, das erste Steuermagnetventil (81) zu steuern, abhängig von den Druckmessungen, die von dem ersten Drucksensor (P1) vorgenommen werden, und den Temperaturmessungen, die von dem ersten Temperatursensor (T1) vorgenommen werden, derart dass die strömungstechnischen Bedingungen des Gasflusses in dem Hohlraum bekannt sind und das Gerät derart das erste Steuermagnetventil (81) abhängig von vorgegebenen strömungstechnischen Kriterien steuern kann.

**2.** Ausrüstung nach Anspruch 1, wobei vorgesehen ist, dass der erste Drucksensor (P2) und der erste Temperatursensor (T2) sogenannte stromabwärtige Sensoren sind und am Auslasskanal (32) angeordnet sind.

3. Ausrüstung nach Anspruch 2, wobei ein zweiter Drucksensor (P1) und ein zweiter Temperatursensor (T1) vorgesehen sind, die am Einspritzkanal (C1) angeordnet sind, und die elektropneumatische Steuereinheit (8) derart konfiguriert ist, dass sie das erste Magnetsteuerventil (81) abhängig von den Druckmessungen, die von dem ersten und dem zweiten Drucksensor (P1, P2) vorgenommen werden, und den Temperaturmessungen, die von dem ersten und dem zweiten Temperatursensor (T1, T2) vorgenommen werden, steuert.

4. Ausrüstung nach einem der Ansprüche 1 bis 3, wobei in dem Blaskopf am Auslasskanal (C2) ein stromabwärtiger Pufferhohlraum (33) vorgesehen ist, an welchem die Informationen von dem ersten Drucksensor (P2) und von dem ersten Temperatursensor (T2) erfasst werden.

5. Ausrüstung nach einem der Ansprüche 1 bis 4, wobei vorgesehen ist, dass der erste Drucksensor (P1) und der erste Temperatursensor (T1) sogenannte stromaufwärtige Sensoren sind und am Einspritzkanal (C1) angeordnet sind.

6. Ausrüstung nach einem der Ansprüche 1 bis 5, wobei ein zweiter Drucksensor (P2) und ein zweiter Temperatursensor (T2) vorgesehen sind, die am Auslasskanal (C2) angeordnet sind, und die elektropneumatische Steuereinheit (8) derart konfiguriert ist, dass sie das erste Magnetsteuerventil (81) abhängig von den Druckmessungen, die von dem ersten und zweiten Drucksensor (P1, P2) vorgenommen werden, und den Temperaturmessungen, die von dem ersten und zweiten Temperatursensor (T1, T2) vorgenommen werden, steuert.

7. Ausrüstung nach einem der Ansprüche 5 bis 6, wobei in dem Blaskopf im Verlauf des ersten Einspritzkanals (C1) ein Pufferhohlraum (30) vorgesehen ist, an welchem die Informationen von dem ersten Drucksensor (P1) und von dem ersten Temperatursensor (T1) erfasst werden.

8. Ausrüstung nach einem der Ansprüche 1 bis 7, wobei das erste Steuermagnetventil (81) abhängig von vorgegebenen strömungstechnischen Kriterien und ferner abhängig von der Zeit gesteuert wird, um eine bestimmte gewünschte Innenform (95) für den zu formenden Glasartikel zu erhalten.

9. Ausrüstung nach einem der Ansprüche 1 bis 8, wobei der Auslasskanal (C2) zwischen dem inneren Hohlraum und der freien Atmosphäre eine Verengung (84) aufweist, die einen vordefinierten Druckabfall bildet.

10. Ausrüstung nach einem der Ansprüche 1 bis 8, wobei der Auslasskanal (C2) zwischen dem inneren Hohlraum und der freien Atmosphäre ein zweites Magnetsteuerventil (82) aufweist

11. Ausrüstung nach einem der Ansprüche 1 bis 10, wobei wenigstens eine Auslassöffnung außeraxial ist, d.h. mit wenigstens einer Strahlachse (W), die von der Hauptachse A weg orientiert ist, und/oder wobei mehrere Auslassöffnungen (31A-31D) am unteren Ende der Pipette vorgesehen sind.

12. Ausrüstung nach einem der Ansprüche 1 bis 11, wobei der Blaskopf eine Pipette (4) umfasst, in welcher wenigstens eine Auslassöffnung für unter Druck stehendes Gas angeordnet ist und/oder die Pipette entlang der Achse A translatorisch verschiebbar ist.

13. Verfahren zum Formen eines Glasartikels durch Blasformen in einer Formgebungsform ausgehend von einem Rohling, wobei das Verfahren die folgenden Schritte umfasst:

- Einspritzen eines unter Druck stehenden Gases in einen inneren Hohlraum des Rohlings über ein erstes Magnetsteuerventil (81) über einen Einspritzkanal (C1), der einen Druckgaseinlass mit wenigstens einer Auslassöffnung (31) verbindet, die in den inneren Hohlraum des Rohlings mündet,
mit einem Luftkreislauf, der ferner einen Auslasskanal (C2) umfasst, der den inneren Hohlraum mit einem Auslass zur Atmosphäre (35) verbindet,
- gleichzeitiges Messen eines ersten Drucks (P1; P2) und einer ersten Temperatur (T1; T2) in dem Luftkreislauf zwischen dem ersten Steuermagnetventil und dem Auslass zur Atmosphäre (35),
- Steuerung des ersten Steuermagnetventils (81) abhängig von den Druck- und Temperaturmessungen, die von dem ersten Drucksensor (P1; P2) und von dem ersten Temperatursensor (T1; T2) vorgenommen werden, derart dass die strömungstechnischen Bedingungen des Gasflusses in dem Hohlraum bekannt sind und eine elektropneumatische Steuereinheit (8) somit das erste Steuermagnetventil (81) abhängig von vorgegebenen strömungstechnischen Kriterien steuern kann.

**14.** Verfahren nach Anspruch 13, wobei vorgesehen ist:

- der erste Druck (P2) und die erste Temperatur (T2), die in dem Auslasskanal (C2) vorherrschen, werden gleichzeitig gemessen,

und/oder wobei vorgesehen ist:

- ein zweiter Druck (P1) und eine zweite Temperatur (T1) die in dem Einspritzkanal (C1) vorherrschen, werden gleichzeitig gemessen,
- das erste Magnetsteuerventil (81) wird abhängig von den Druckmessungen des ersten und zweiten Drucksensors (P1, P2) und den Temperaturmessungen des ersten und zweiten Temperatursensors (T1, T2) gesteuert.

**15.** Verfahren nach Anspruch 13, wobei vorgesehen ist:

- der erste Druck (P1) und die erste Temperatur (T1), die in dem Einspritzkanal (C1) vorherrschen, werden gleichzeitig gemessen,

und/oder wobei vorgesehen ist:

- ein zweiter Druck (P2) und eine zweite Temperatur (T2), die in dem Auslasskanal (C2) vorherrschen, werden gleichzeitig gemessen,
- das erste Magnetsteuerventil (81) wird abhängig von den Druckmessungen des ersten und zweiten Drucksensors (P1, P2) und den Temperaturmessungen des ersten und zweiten Temperatursensors (T1, T2) gesteuert.

**Claims**

**1.** Equipment for forming a glass article (92), comprising:

- a forming mould (2) for receiving a glass blank (91) intended to become the glass article,
- a gas-injection device (10) with a blowing head (3) intended to propel gas into the cavity inside the blank, and intended to be received in the opening (19) of the blank having a principal axis (A), the gas-injection device comprising an air circuit with:

  • a pressurised gas inlet PS,
  • a first injection channel (C1) connecting the pressurised-gas inlet to at least one outlet orifice (31) emerging in the cavity inside the blank, through a first control solenoid valve (81),
  • an exhaust channel (C2) connecting the internal cavity to an outlet to atmosphere (35),

- at least one first pressure sensor (P1; P2) and one first temperature sensor (T1; T2) both arranged on the air circuit between the first control solenoid valve and the outlet to atmosphere (35),
- an electropneumatic control unit (8) configured to control the first control solenoid valve (81) according to the pressure measurements recorded by the first pressure sensor (P1) and the temperature measurements recorded by the first temperature sensor (T1),
- so that the aeraulic conditions of the gas flow in the cavity can be known and the equipment can thus control the first control solenoid valve (81) according to predetermined aeraulic criteria.

**2.** Equipment according to claim 1, wherein the first pressure sensor (P2) and the first temperature sensor (T2) are to be referred to as downstream sensors and to be arranged on the exhaust channel (C2).

**3.** Equipment according to claim 2, wherein a second pressure sensor (P1) and a second temperature sensor (T1) are provided arranged on the injection channel (C1), and the electropneumatic control unit (8) configured to control the first control solenoid valve (81) according to the pressure measurements recorded by the first and second pressure sensors (P1, P2) and the temperature measurements recorded by the first and second temperature sensors (T1, T2).

**4.** Equipment according to one of claims 1 to 3, wherein a downstream buffer cavity (33) is provided in the blowing head on the exhaust channel (C2), at the point at which the information is taken from the first pressure sensor (P2) and from the first temperature sensor (T2).

5. Equipment according to one of claims 1 to 4, wherein the first pressure sensor (P1) and the first temperature sensor (T1) are to be referred to as upstream sensors and to be arranged on the injection channel (C1).

6. Equipment according to one of claims 1 to 5, wherein a second pressure sensor (P2) and a second temperature sensor (T2) are provided both arranged on the exhaust channel (C2), and the electropneumatic control unit (8) configured to control the first control solenoid valve (81) according to the pressure measurements recorded by the first and second pressure sensors (P1, P2) and the temperature measurements recorded by the first and second temperature sensors (T1, T2).

7. Equipment according to one of claims 5 to 6, wherein a buffer cavity (30) is provided in the blowing head on the path of the first injection channel (C1), at the point from which the information is taken from the first pressure sensor (P1) and from the first temperature sensor (T1).

8. Equipment according to one of claims 1 to 7, wherein the first control solenoid valve (81) is controlled according to the predetermined aeraulic criteria and furthermore according to time, in order to obtain a particular internal shape (95) required for the glass article being formed.

9. Equipment according to one of claims 1 to 8, wherein the exhaust channel (C2) comprises, between the internal cavity and free atmosphere, a restriction (84) forming a predefined pressure drop.

10. Equipment according to one of claims 1 to 8, wherein the exhaust channel (C2) comprises, between the internal cavity and free atmosphere, a second control solenoid valve (82).

11. Equipment according to one of claims 1 to 10, wherein at least one outlet orifice is off-centre, namely with at least one jet axis (W) oriented away from the principal axis (A), and/or a plurality of outlet orifices (31A-31D) are provided at the bottom end of the pipette.

12. Equipment according to one of claims 1 to 11, wherein the blowing head comprises a pipette (4) wherein at least one pressurised-gas outlet orifice is arranged and/or the pipette can be moved in translation along the axis A.

13. Method for forming a glass article by blowing in a forming mode starting from a blank, the method comprising the steps of:

- injecting, into an internal cavity of a blank, via a first control solenoid valve (81), a pressurised gas via an injection channel (C1) connecting a pressurised-gas inlet to at least one outlet orifice (31) emerging in the internal cavity of the blank,
with an air circuit further comprising an exhaust channel (C2) connecting the internal cavity to an outlet to atmosphere (35),
- simultaneously measuring a first pressure (P1; P2) and a first temperature (T1; T2) on the air circuit between the first control solenoid valve and the outlet to atmosphere (35),
- controlling the first control solenoid valve (81) according to the pressure and temperature measurements recorded by the first pressure sensor (P1; P2) and by the first temperature sensor (T1; T2),
so that the aeraulic conditions of the gas flow in the cavity can be known and an electropneumatic control unit (8) can thus control the first control solenoid valve (81) according to predetermined aeraulic criteria.

14. Method according to claim 13, comprising:

- simultaneously measuring the first pressure (P2) and the first temperature (T2) prevailing in the exhaust channel (C2),

and/or comprising:

- simultaneously measuring a second pressure (P1) and a second temperature (T1) prevailing in the injection channel (C1),
- controlling the first control solenoid valve (81) according to the pressure measurements recorded by the first and second pressure sensors (P1, P2) and the temperature measurements recorded by the first and second temperature sensors (T1, T2).

15. Method according to claim 13, comprising:

- simultaneously measuring the first pressure (P1) and the first temperature (T1) prevailing in the injection channel (C1),

and/or comprising:

- simultaneously measuring a second pressure (P2) and a second temperature (T2) prevailing in the exhaust channel (C2),
- controlling the first control solenoid valve (81) according to the pressure measurements recorded by the first and second pressure sensors (P1, P2) and the temperature measurements recorded by the first and second temperature sensors (T1, T2).

EP 3 560 895 B1

90

1

A

3

12

2

**FIG. 1**

91

18

19

14

91

21

22

23

**FIG. 2**

17

FIG. 3

FIG. 4

FIG. 5

FIG. 6

FIG. 7

FIG. 8

14

32

37

**FIG. 9A**

3

31A  +A  31B

**FIG. 9B**

3

31A  31B
+A
31D  31C

**FIG. 9C**

3

31C
31A  +A  31B
31D

**FIG. 9D**

14    A    19    92

95

95c

**FIG. 10**

95a  95b

# FIG. 11

EP 3 560 895 B1

FIG. 12

## FIG. 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2993879
- US 2015013387 A